# EUROPÄISCHE PATENTSCHRIFT

(11) **EP 1 839 788 B1**
(45) Veröffentlichungstag und Bekanntmachung des Hinweises auf die Patenterteilung: **16.12.2009**
(21) Anmeldenummer: 07004996.0
(22) Anmeldetag: 12.03.2007
(51) Int. Cl.: B23B 51/10

(54) **Entgratmesser für ein Entgratwerkzeug**
Burring knife for a deburring tool
Mesure d'ébavurage pour un outil d'ébavurage

(30) Priorität: 28.03.2006 DE 102006014135
(43) Veröffentlichungstag der Anmeldung: 03.10.2007
(73) Patentinhaber: Heule, Ulf, 9436 Balgach (CH)
(72) Erfinder: Heule , Heinrich, 9463 Balgach (DE)
(74) Vertreter: Riebling, Peter

(56) Entgegenhaltungen:
- EP-A- 1 579 937
- EP-A1- 1 356 884
- EP-A2- 0 370 210
- WO-A-98/01251

## Beschreibung

Die Erfindung betrifft ein Entgratmesser für ein Entgratwerkzeug nach dem Oberbegriff des Patentanspruches 1, siehe EP 157 9 937 A2.

Mit einem auf den gleichen Anmelder zurückgehenden Patent wurde ein sogenanntes GHS-Messer entwickelt, welches Niederschlag in verschiedenen Patenten gefunden hat. Kennzeichnend für dieses Entgratmesser ist, dass eine etwa keilförmige Schneidkante vorhanden ist, wobei die Schneidkante einen positiven Winkel zur Fläche des zu entgratenden Bohrungsrandes aufweist. Dies bedeutet, dass bei einer positiv geneigten Schneidkante die Schneidkante nächst der zu entgratenden Bohrung innen aufsetzt und das Schneidmesser den Bohrungsrand berührt und nachfolgend schräg entgratet. Die Entgratungsschräge entspricht dabei dem Winkel, den die Schneidkante mit dem Bohrungsrand einschließt.

Kennzeichnend für dieses sogenannte GHS-Messer war, dass bei Einwirkung der schräg zur Bohrungsoberfläche geneigten Schneidkante eine Zugkraft auf das Messer in Richtung auf die Bohrungsmittellinie erzeugt wurde, was bei zunehmender Entgratwirkung dazu führte, dass das Schneidmesser in Richtung auf die Drehachse radial einwärts verdrängt und bewegt wurde.

Die schräg zur Drehachse wirkende Kraft auf die angeschrägte Schneidkante führte also zu einer radial einwärts gerichteten Zugkraft auf das Schneidmesser, welches mit einer bestimmten Kraftkomponente demzufolge radial einwärts in Richtung auf die Drehachse gezogen oder gestoßen wurde.

Hierbei gehört es zum Stand der Technik, dass das bekannte Schneidmesser mit einer bestimmten Federkraft radial auswärts gehalten wurde und die auf die Schneidkante wirkende, schräg einwärts gerichtete Kraftkomponente wiederum das Messer hingegen der Federkraft radial einwärts verdrängen wollte.

In diesem Wechselspiel der Kräfte kam es dann dazu, dass das Schneidmesser eine bestimmte Entgrataktion am Bohrungsrand ausführte, und sobald dann die radial einwärts gerichtete Kraft auf die Schneidkante größer war als die entgegengehaltene Federkraft auf das Schneidmesser, wurde das Schneidmesser in den Bohrungsinnendurchmesser hinein verdrängt, wo die Schneidaktion der Schneidkante aufhörte.

Ein derartiges Schneidmesser hat sich in großem Umfang bewährt, aber bei zunehmender Abarbeitung der Schneidkante, d. h. wenn diese stumpf wird, wird früher eine höhere Zugkraft in Richtung radial einwärts auf die Drehachse auf das Schneidmesser erzeugt, wodurch die entgratete Fläche am Bohrungsrand kleiner wurde. Mit zunehmendem Verschleiß der Schneidkante wurde somit die Fläche der entgrateten Bohrungskante geringer, was unerwünscht ist.

Damit kam es zu einer Abweichung der Größe der Fasenfläche.

Um diesen Nachteil zu vermeiden, wurde nach weiteren Patenten des gleichen Anmelders das sogenannte DEFA-Messer entwickelt. Dieses Messer zeichnete sich dadurch aus, dass die Schneidkante senkrecht zur Drehachse des Schneidmessers ausgerichtet ist, was dazu führt, dass die Schneidkante plan auf der Oberfläche des zu entgratenden Bohrungsdurchmessers aufsetzt und sich dort eingräbt. Es wurde also im wesentlichen eine Schneidkraft erzeugt, die parallel zur Drehachse des Schneidmessers gerichtet ist. Eine radial einwärts gerichtete Zugkomponente entfiel bei diesem bekannten Schneidmesser. Damit wurde eine stabile Entgrataktion bei einer relativ gleichbleibenden Fasenfläche - unabhängig vom Verschleißzustand der Schneidkante - erzielt.

Gleichwohl kam es zu Ungleichmäßigkeiten in der Fasenfläche, wenn es zu einem konischen Verschleiß der an sich gerade ausgebildeten Schneidfläche kam. Dies kam vor allem dann vor, wenn ein Verschleiß an der sogenannten Steuerfläche stattfand. Bei verschlissener Steuerfläche wird die Fasenfläche ungleichmäßig, und der Fasenwinkel war nicht mehr zuverlässig gleichbleibend.

Der Erfindung liegt deshalb die Aufgabe zugrunde, ein Entgratmesser nach dem Gegenstand der beiden oben genannten bekannten Ausführungen so weiterzubilden, dass unabhängig von dem Verschleiß der Schneidkante eine stets gleichbleibende Fasenfläche erzielt wird.

Zur Lösung der gestellten Aufgabe ist die Erfindung dadurch gekennzeichnet, dass die Schneidfläche am Entgratmesser einen negativen Winkel in Richtung zur Werkstückoberfläche einnimmt.

Mit der gegebenen technischen Lehre ergibt sich der wesentliche Vorteil, dass nun aufgrund des gegebenen, negativen Winkels der Schneidfläche nun eine Zugkraftkomponente auf das Schneidmesser ausgeübt wird, welche das Schneidmesser radial auswärts in Richtung von der Drehachse zieht und das Schneidmesser demzufolge sehr stabil auswärts gerichtet festhält, ohne dass die Gefahr besteht - wie beim GHS-Messer beschrieben - dass das Messer mit zunehmender Schneidaktion radial einwärts in Richtung auf die Drehachse verdrängt wird.
Nach dem Erfindungsgegenstand wird also eine zusätzliche Zugkraftkomponente auf das Schneidmesser in Richtung radial auswärts von der Drehachse erzeugt, d. h. das Schneidmesser wird von der Drehachse weggezogen und stabil auswärts auf einer stabilen Außenposition gehalten.

Eine solche stabile Außenposition wird beibehalten, bis die negative Schneidkante bei einer bestimmten Position in eine Steuerfläche übergeht, die einen positiven Winkel zur Werkstückoberfläche einnimmt.

Aufgrund dieses Wechsels von der negativen Schneidkante in die mit einem positiven Winkel versehene Steuerfläche kommt es zu einem Einwärtsschieben des Entgratmessers in Richtung radial einwärts auf die Drehachse, und damit werden die gleichen Verhältnisse erzielt, wie bei dem oben beschriebenen DEFA-Messer.

Die Anordnung einer Schneidkante mit einem negativen Winkel in Richtung zur Werkstückoberfläche hat also den Vorteil, dass diese Schneidkante sich wie eine "Kralle" am Bohrungsrand festhält und sogar während der Schneidaktion radial auswärts gerichtet ausgezogen wird und so stabil in dieser Position bleibt, bis schließlich die negative Schneidkante in die positive Steuerfläche übergeht.

Damit werden einwandfrei gerade und mit einem genau definierten Winkel versehende Fasenflächen geschaffen, wie es bisher noch nicht bekannt war. Im übrigen ist die Größe und die Neigung der Fasenfläche völlig unabhängig von dem Verschleißgrad der einen negativen Winkel einnehmenden Schneidkante, denn selbst wenn diese verschlissen wird, kommt es stets zu der vorher beschriebenen auswärts gerichteten Auszugsaktion auf das Schneidmesser, so dass dieses stabil in seiner ausgezogenen Stellung bleibt.

Bei der Verwirklichung des Erfindungsgegenstandes werden unterschiedliche Ausführungsformen bei der Formgebung der Schneidkante mit negativem Winkel beansprucht.

In einer ersten Ausgestaltung ist es vorgesehen, dass die Scheidkante als konisch mit dem besagten negativen Winkel geneigte Gerade ausgebildet ist.

In einer zweiten Ausführungsform kann es vorgesehen sein, dass diese Gerade noch zusätzlich konkav gewölbt ist und in einer dritten Ausführungsform kann vorgesehen werden, dass diese Schneidkante konvex gewölbt ist.

Ebenso werden konvex/konkav gewölbte Übergänge (deshalb eine s-förmig geschwungene Schneidkante) beansprucht.

Wichtig bei allen Ausführungsformen ist dem gemäß, dass im wesentlichen ein Mittenwinkel durch die Schneidkante einen negativen Winkel zu der Werkstückoberfläche einnimmt.

Ebenso gilt dies für die Steuerfläche, die sich an die Schneidkante anschließt, auch diese kann als Gerade ausgebildet sein oder als ballige Fläche, die entweder konvex oder konkav gewölbt ist.

Die Erfindung ist nicht auf eine einzige Schneidkante an einem Entgratmesser beschränkt. Es kann auch ein Entgratmesser vorgesehen werden, welches symmetrisch bezüglich einer Mittenlängslinie zwei gegenüberliegende Schneidkanten aufweist, so dass damit eine vorwärts- und rückwärtsgehende Entgrataktion auf einen Bohrungsrand einer Durchgangsbohrung vorgesehen werden kann.

In der einfachsten Ausführungsform hat das Entgratmesser nach der Erfindung jedoch nur eine einzige Schneidkante, um beispielsweise beim Eintauchen in eine Bohrung diesen Bohrungsrand zu entgraten.

Demzufolge ist es nicht lösungsnotwendig, dass die beiden jeweils einen negativen Winkel einnehmenden Schneidkanten eines für Durchgangsbohrungen verwendeten Entgratmessers auch jeweils einen gleichen Winkel und eine gleiche Form einnehmen.

So kann beispielsweise die Schneidkante, welche den oberen Bohrungsrand entgratet, eine andere Neigung haben, als vergleichsweise die Schneidkante, die den hinteren Bohrungsrand entgratet.

Ebenso kann es vorgesehen sein, dass die vordere Schneidkante bogenförmig in irgendeiner bestimmten Weise ausgebildet ist, während die dem hinteren Bohrungsrand zugeordnete Schneidkante eine andere ballige, schlangenförmige, konvexe oder konkave Form aufweisen kann.

Demzufolge können auch unterschiedliche Fasenwinkel für die Schneidkanten verwendet werden, so dass beispielsweise ein Fasenwinkel von 15 Grad für das vorderseitige Entgraten des Bohrungsrandes und ein Fasenwinkel von 30 Grad für das rückseitige Entgraten des Bohrungsrandes vorgesehen werden kann.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Seitenansicht eines GHS-Entgratmessers nach dem Stand der Technik
- Figur 2:: Seitenansicht eines DEFA-Messers nach dem Stand der Technik
- Figur 3:: Seitenansicht eines Entgratmessers nach der Erfindung
- Figur 4:: Entgratmesser mit der Anordnung an einem Werkzeughalter nach erfolgtem Entgraten einer Durchgangsbohrung
- Figur 5:: Entgratmesser nach Figur 3 in vergrößerter Darstellung
- Figur 6:: Stirnansicht auf das Entgratmesser nach Figur 5 in Pfeilrichtung VI in Figur 5
- Figur 7:: eine perspektivische Darstellung des Entgratmessers nach den Figuren 3, 5 und 6
- Figur 8:: Seitenansicht einer Abwandlung eines Entgratmessers nach Figur 5 mit bogenförmigen Führungskanten
- Figur 9:: die Draufsicht auf das Entgratmesser nach Figur 8 in Pfeilrichtung IX
- Figur 10:: eine perspektivische Ansicht des Entgratmessers zu Figur 7 und 8 mit verbesserter Seiten- und Längsführung

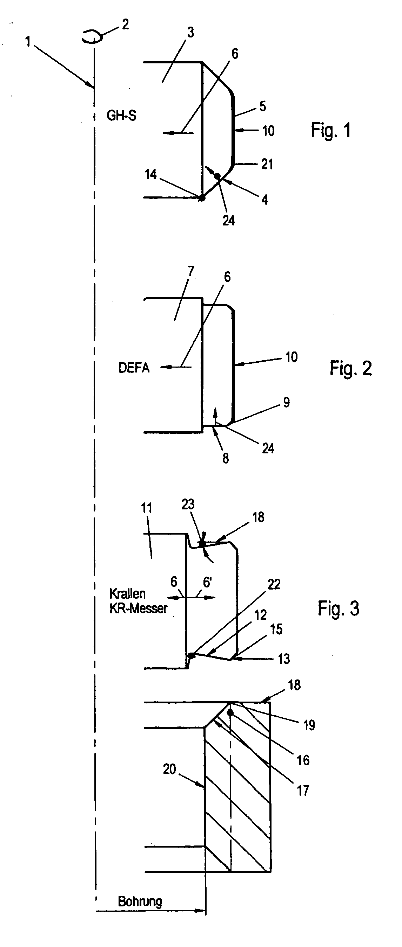

Anhand der Figuren 1 und 2 werden zunächst die Entgratmesser nach dem Stand der Technik erläutert.

Die Entgratmesser nach den Figuren 1 bis 3 sind bezüglich einer Drehachse 1 beispielsweise in Pfeilrichtung 2 oder in Gegenrichtung hierzu drehend angetrieben.

Sie haben den Zweck, auf eine Werkstückoberfläche 18 aufgesetzt zu werden und hierbei eine Fasenfläche 17 im Bereich einer Bohrung mit einem Bohrungsdurchmesser 20 anzubringen.

Zu diesem Zweck ist das Schneidmesser 3 (GHS-Messer) mit Schneidkanten 4 ausgerüstet, die einen positiven Winkel in Richtung zur Werkstückoberfläche 18 einnehmen. Hierbei ist wesentlich, dass beim Eindringen in den Bohrungsdurchmesser 20 zunächst die Schneidkante 4 bei Position 14 auf die Werkstückoberfläche 18 aufsitzt und von dieser Position 14 ausgehend die Schneidaktion entlang der Schneidkante 4 stattfindet. Hierbei wird eine Schneidkraft 24 erzeugt, die etwa normal zur Schneidkante 4 gerichtet ist. Hieraus ergibt sich, dass damit eine Druckkraftkomponente in Pfeilrichtung 6 auf das Schneidmesser 3 erzeugt wird, welches das Schneidmesser 3 in Pfeilrichtung 6 in Richtung einwärts auf die Drehachse 1 verdrängen will. Dieser Pfeilrichtung 6 ist jedoch die auf das Schneidmesser 3 entgegenwirkende Federkraft entgegengesetzt, so dass es zu einem relativ stabilen Eingreifen der Schneidkante 4 auf der Werkstückoberfläche 18 kommt.

Die Schneidkante 4 endet bei Position 21 in einer Stirnfläche 10. Die Stirnfläche ist hierbei als Gleitradius 5 ausgebildet. Dies bedeutet, dass, sobald die Position 21 in den Bohrungsdurchmesser 20 gelangt, die Schneidaktion aufhört und dann der Gleitradius 5 an der Bohrungsinnenfläche entlang gleitet, ohne diese weiter zu bearbeiten.

Andere Verhältnisse sind bei dem bekannten Schneidmesser 7 (DEFA-Messer) in Figur 2 dargestellt. Dort ist erkennbar, dass die Schneidkante 8 parallel zur Werkstückoberfläche 18 ausgebildet ist und somit die gesamte Schneidkante 8 auf einmal in Eingriff mit der Werkstückoberfläche 18 gelangt. Dadurch wird eine Schneidkraft 24 ausgeübt, die parallel zu der Drehachse 1 ist, d. h. es liegt keine in Pfeilrichtung 6 gerichtete einwärts drückende Kraft auf das Schneidmesser 7 vor. Dieses Schneidmesser ist demzufolge sehr stabil und es gelingt mit diesem Schneidmesser sehr stabile und größengleiche Fasenflächen 17 an einen Bohrungsrand anzubringen. Bei dieser Schneidkante 8 ist wiederum charakteristisch, dass diese in eine schräg geneigte Steuerfläche 9 übergeht, und dass, wenn die Steuerfläche 9 auf der Werkstückoberfläche 18 aufsitzt, eine radial einwärts gerichtete Zugkraft oder Druckkraft auf das Schneidmesser 7 erzeugt wird, wodurch dieses in den Bohrungsdurchmesser 20 hinein verdrängt wird.

Hier setzt nun die Erfindung ein, die eine stabilisierte Entgrataktion verwendet, bei der eine in Pfeilrichtung 6' sich ergebende Gegenkraft auf das Schneidmesser 11 erzeugt wird, solange die einen negativen Winkel 23 einnehmende Schneidkante 12 sich in Eingriff mit der Fasenfläche 17 befindet. Charakteristisch hierbei ist, dass zunächst die radial liegende Position 15 in Eingriff mit der Werkstückoberfläche 18 kommt und dass dann in Richtung der Schrägen (parallel zur negativen Schneidkante 12) Entgrataktionen im Bereich der Fasenfläche 17 stattfinden und schließlich dann die Schneidkante 12 außer Eingriff mit der Fasenfläche 17 kommt, wenn eine Steuerfläche 13, die einen positiven Winkel in Richtung auf die Werkstückoberfläche 18 hat, in den Bohrungsdurchmesser 20 gelangt.

Es ist also nicht lösungsnotwendig, dass die Schneidkante 12 bis Position 22 die Bohrung bearbeitet. Die Position 22 an der Schneidkante muss nicht in Eingriff mit dem Bohrungsdurchmesser sein.

Wichtig ist jedenfalls, dass entgegen der vorher genannten radial einwärts gerichteten Kraft eine radial auswärts gerichtete in Pfeilrichtung 6 zeigende Zugkraft auf das Schneidmesser 11 erzeugt wird, welches dieses stabil während der gesamten Schneidaktion in der in Figur 3 dargestellten Stellung hält und erst ein Wechsel stattfindet, wenn sie in einen positiven Winkel zur Werkstückoberfläche 18 aufweisende Steuerfläche 13 in Eingriff mit der Werkstückoberfläche 18 gelangt.

Es wird also zunächst der Fasenaußendurchmesser 16, beginnend bei Position 19, in Angriff genommen und dann radial einwärts gerichtet die weitere Entgrataktion entlang der Fasenfläche 17 ausgeführt. Dies ist eine genau entgegengesetzte Bewegung, wie vergleichsweise bei dem Entgratmesser 3 nach Figur 1.

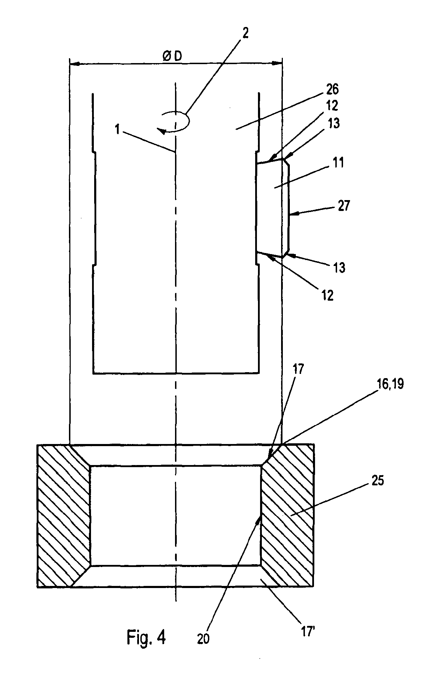

Die Figur 4 zeigt die vollständige Entgratung einer Durchgangsbohrung in einem Werkstück 25, wo bereits schon das Entgratmesser 11 die entsprechenden Fasenflächen 17 an der Vorderseite und 17' an der Rückseite angebracht hat.

Hierbei ist noch erkennbar, dass das Entgratmesser an einem Werkzeughalter 26 angeordnet ist, der in der vorher erwähnten Drehachse 1 beispielsweise in Pfeilrichtung 2 drehend angetrieben ist.

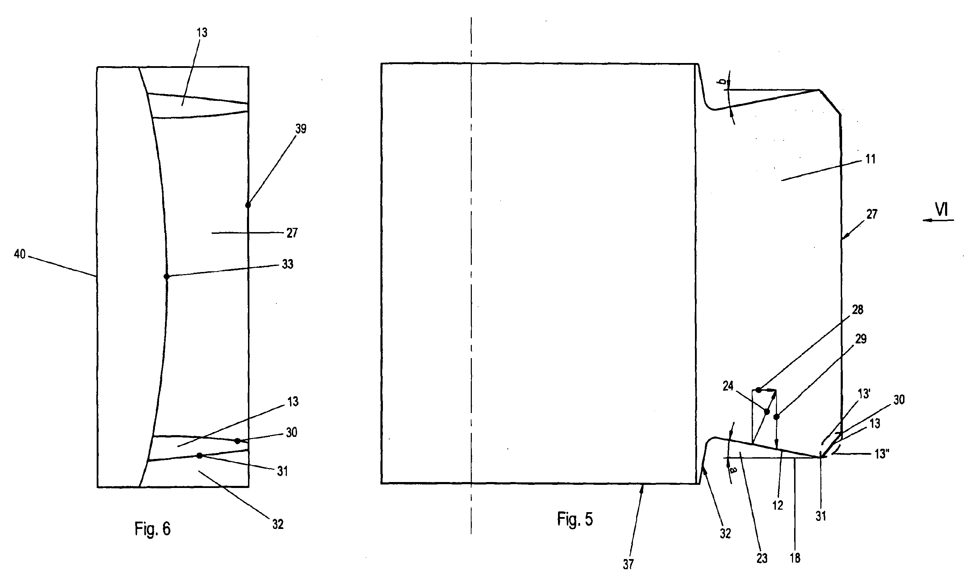

Aus der Figur 4 und 5 gehen weitere Einzelheiten hervor.

Zunächst ist durch Vergleich der Figur 5 und 6 erkennbar, dass die Stirnfläche 27 des Entgratmessers 11 etwa einen rechteckförmigen Querschnitt aufweist. Dass heißt, die rechte und linke Seitenkante 39, 40 sind etwa parallel zueinander gerichtet und bilden so die etwa rechteckförmige Stirnfläche 27 des Entgratmessers.

Ferner ist in Figur 5 noch die Zerlegung der Schneidkraft 24 in die beiden senkrechten Komponenten dargestellt. Es ist erkennbar, dass eine Zugkraft 28 auf das Messer radial auswärts von der Drehachse 1 auf das Entgratmesser ausgeübt wird, während die Normalkraft 29 die Schneidaktion durchführt.

Diese Normalkraft 29 ist hierbei senkrecht zur Werkstückoberfläche 18 gerichtet.

Mit 23 ist somit der negative Winkel der Schneidkante 12 in Richtung auf die Werkstückoberfläche 18 dargestellt. Ferner ist dargestellt, dass die Steuerfläche 13 entweder als Gerade oder als konkave Fläche (Steuerfläche 13') oder als konvexe Fläche ausgebildet sein kann.

Die Steuerfläche 13 beginnt bei Position 31 und endet nach einer gewissen Strecke in der Stirnfläche 27.

Aus Figur 6 sind die Begrenzungen mit den Kanten 30, 31 der Steuerfläche 13 näher dargestellt.

Ebenso ist in Figur 6 eine Spanfläche 33 dargestellt, und es ist erkennbar, dass die Schneidkante 12 radial einwärts gerichtet in einer Freistellung 32 endet, die aus fertigungstechnischen Gründen dort angepasst ist und keinerlei schneidende Aktion ausführt.

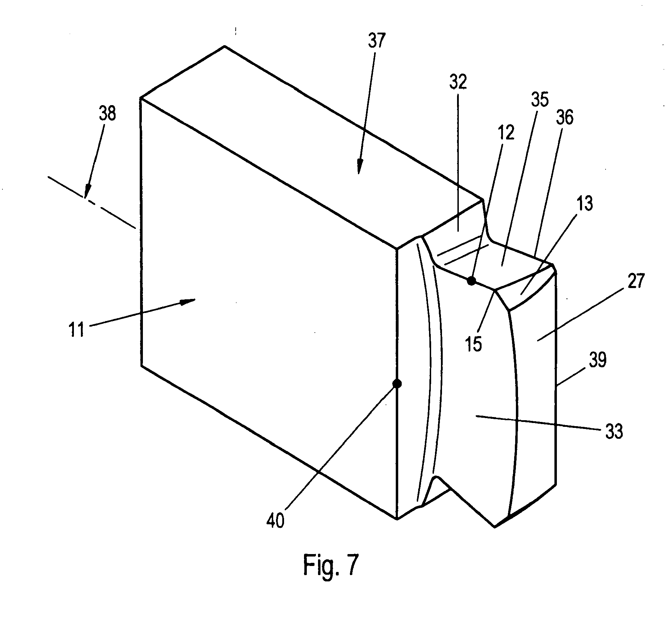

In der Figur 7 ist die perspektivische Darstellung eines Schneidmessers nach Figur 5 und 6 dargestellt.

Hier ist erkennbar, dass die Spanfläche 33 als bogenförmige Kurve (Spanleitkurve) zur Ableitung der an der Schneidkante 12 entstehenden Spänen gewölbt ist. Diese Spanfläche 33 wird durch eine seitliche Kante 40 begrenzt, zu der die vorher erwähnte parallele Kante 39 gehört.

Wichtig ist, dass die Schneidkante 12 höher ist als die Freikante 36, um eine abschälende Wirkung der Schneidkante zu ermöglichen, weil die Freikante 36 stets außer Eingriff mit dem Werkstück gehalten werden muss. Aus diesem Grund ist die Freifläche 35 vorhanden, welche dafür sorgt, dass lediglich immer nur die Schneidkante 12 in schneidendem Eingriff mit der Werkstückoberfläche 18 ist.

In der Messerfläche 37 wird das gesamte Schneidmesser in dem Werkzeughalter 26 längs geführt, wobei die Längsführung auch noch durch die Flächen erfolgt, die durch die Kanten 39 und 40 bestimmt sind. Es erfolgt also ein etwa rechteckförmiger Durchgriff im Werkzeughalter 26, in dem dieses Schneidmesser 11 verschiebbar geführt ist.

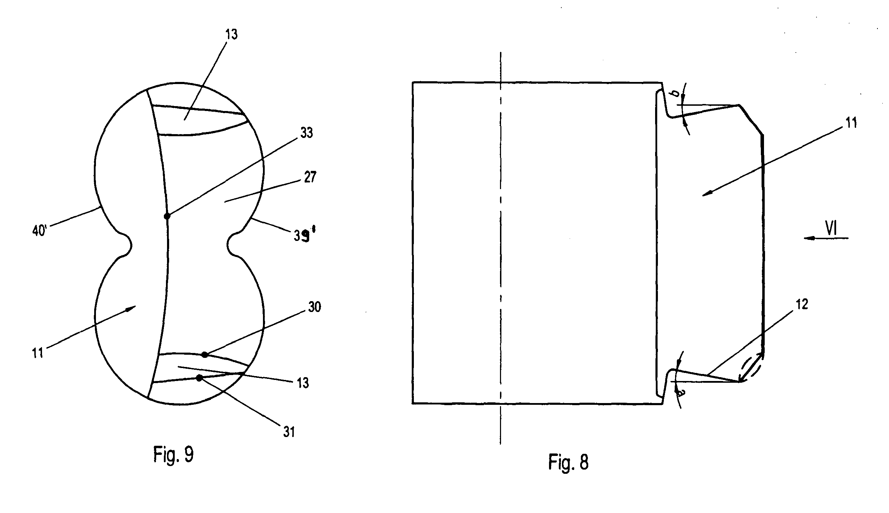

Im Gegensatz hierzu zeigen die Figuren 8 und 9 ein etwa brillenförmig geformtes Schneidmesser, bei dem nicht mehr die Kanten 39 und 40 parallel sind, sondern durch bogenförmige Kanten 39' und 40' ausgetauscht sind. Es ergibt sich dann damit keine rechteckförmige Ausnehmung mehr im Werkzeughalter, sondern eine etwa brillenförmige (doppel-c-förmige) Ausnehmung im Werkzeughalter, um eine bessere Verkantungsführung für das Schneidmesser 11 zu ermöglichen.

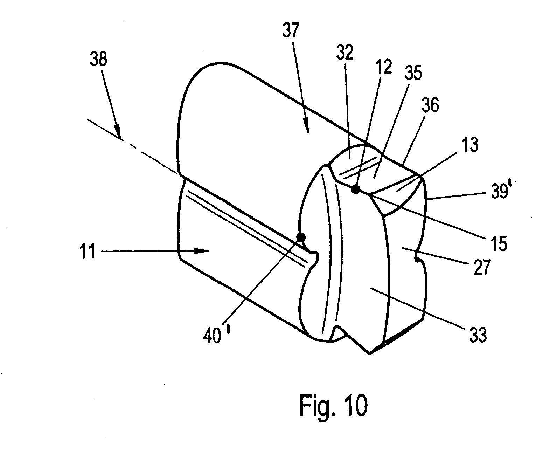

Die Figur 10 zeigt die perspektivische Darstellung eines in den Figuren 8 und 9 dargestellten doppel-c-förmigen Entgratmessers mit der verbesserten Seiten- und Längsführung in einem Werkzeughalter 26.

### Zeichnungslegende

- 1: Drehachse
- 2: Pfeilrichtung
- 3: Schneidmesser (St.d.T.)
- 4: Schneidkante
- 5: Gleitradius
- 6: Pfeilrichtung 6'
- 7: Schneidmesser (St.d.T.)
- 8: Schneidkante
- 9: Steuerfläche
- 10: Stirnfläche
- 11: Schneidmesser (Erfindung)
- 12: Schneidkante
- 13: Steuerfläche 13', 13"
- 14: Position
- 15: Position
- 16: Fasenaußendurchmesser
- 17: Fasenfläche 17'
- 18: Werkstückoberfläche
- 19: Position
- 20: Bohrungsdurchmesser
- 21: Position
- 22: Position
- 23: negativer Winkel
- 24: Schneidkraft
- 25: Werkstück
- 26: Werkzeughalter
- 27: Stirnfläche
- 28: Zugkraft
- 29: Normalkraft
- 30: Kante
- 31: Kante
- 32: Freistellung
- 33: Spanfläche
- 34: nicht belegt
- 35: Freifläche
- 36: Freikante
- 37: Messerfläche
- 38: Mittenlinie
- 39: Kante 39'
- 40: Kante 40'

## Patentansprüche

1. Entgratmesser (11) für ein Entgratwerkzeug zum Entgraten der Kanten von Durchgangsbohrungen eines Werkstückes (25), welches sich radial nach außen erstreckt und entgegen einer Federkraft radial nach außen gedrückt wird, wobei das Entgratmesser mindestens eine etwa keilförmig ausgebildete Schneidkante (12) aufweist, welche mittels einer Steuerfläche (13, 13', 13") mit einer Stirnfläche (27) verbunden ist, und wobei die Schneidkante (12) am Entgratmesser einen negativen Winkel (23) in Richtung zur Werkstückoberfläche (18) einnimmt, welcher im Gebrauch eine Zugkraftkomponente auf das Entgratmesser (11) erzeugt, welche das Entgratmesser (11) radial auswärts in Richtung von einer Drehachse (1) zieht und das Entgratmesser (11) relativ stabil auswärts gerichtet auf einer stabilen Außenposition hält, und wobei die Steuerfläche (13, 13', 13") einen positiven Winkel (23) in Richtung zur Werkstückoberfläche (18) einnimmt, **dadurch gekennzeichnet, dass** die Schneidkante (12) als konisch mit dem negativen Winkel (23) geneigte Gerade ausgebildet ist, welche zusätzlich konkav, konvex oder s-förmig gewölbt ausgebildet ist, wobei ein Mittenwinkel durch die Schneidkante (12) einen negativen Winkel (23) zur Werkstückoberfläche (18) einnimmt **und dass** die sich an die Schneidkante (12) anschließende Steuerfläche (13, 13', 13") als ballige Fläche ausgebildet ist, wobei die ballige Fläche konkav oder gewölbt ausgebildet ist.

2. Entgratmesser nach Anspruch 1, **dadurch gekennzeichnet, dass** zwei symmetrisch, bezüglich einer Mittenlängslinie (38), sich gegenüberliegend angeordnete Schneidkanten (12) jeweils unterschiedliche Winkel und Formen aufweisen.

3. Entgratmesser nach einem der vorhergehenden Ansprüche 1 oder 2, **dadurch gekennzeichnet, dass** das Entgratmesser an einem Werkzeughalter (26) angeordnet ist, welcher in der Drehachse (1) drehend angetrieben ist.

4. Entgratmesser nach einem der vorhergehenden Ansprüche 1 bis 3, **dadurch gekennzeichnet, dass** das die Stirnfläche (27) des Entgratmessers (11) einen etwa rechteckförmigen Querschnitt aufweist, wobei eine rechte und linke Seitenkante (39, 40) etwa parallel zueinander gerichtet sind und die etwa rechteckförmige Stirnfläche (27) des Entgratmessers (11) bilden.

5. Entgratmesser nach Anspruch 3, **dadurch gekennzeichnet, dass** das Entgratmesser (11) brillenförmig (doppel-c-förmig) mit bogenförmigen Kanten (39', 40') ausgebildet ist, wobei eine Ausnehmung zur Aufnahme des Entgratmessers (11) im Werkzeughalter (26) gleich ausgebildet ist.

6. Entgratmesser nach einem der vorhergehenden Ansprüche 1 bis 5, **dadurch gekennzeichnet, dass** sich von der Schneidkante (12) eine Spanfläche (33) zur Ableitung der Späne anschließt, wobei die Schneidkante (12) im Bezug zu einer Mittenlängslinie (38) des Entgratmessers (11) radial entfernter angeordnet ist als eine Freikante (36), welche mittels einer Freifläche (35) mit der Schneidkante (12) verbunden ist.

## Claims

1. Deburring knife (11) for a deburring tool for deburring edges of through-holes of a workpiece (25), which extends radially outwardly and is pressed radially outwardly against a spring force, the deburring knife having at least one approximately wedge-shaped cutting edge (12), which is connected by means of a control face (13, 13') 13") to an end face (27), and the cutting edge (12) on the deburring knife adopting a negative angle (23) in the direction of the workpiece surface (18), which, during use, produces a tensile force component on the deburring knife (11), which pulls the deburring knife (11) radially outwards in the direction of a rotational axis (1) and holds the deburring knife (11) directed relatively stably outwards on a stable outer position, and the control face (13, 13', 13") adopting a positive angle (23) in the direction of the workpiece surface (18), **characterised in that** the cutting edge (13) is configured as a straight line which is conically inclined at the negative angle (23) and is additionally curved in a concave, convex or s-shaped manner, a centre angle through the cutting edge (12) adopting a negative angle (23) with respect to the workpiece surface (18) and **in that** the control face (13, 13', 13") adjoining the cutting edge (12) is configured as a crowned surface, the crowned surface being concave or curved.

2. Deburring knife according to claim 1, **characterised in that** two cutting edges (12) which are arranged symmetrically and opposing with respect to a centre longitudinal line (38), in each case have different angles and shapes.

3. Deburring knife according to either of the preceding claims 1 or 2, **characterised in that** the deburring knife is arranged on a tool holder (26), which is driven in a rotating manner in the rotational axis (1).

4. Deburring knife according to any one of the preceding claims 1 to 3, **characterised in that** the end face (27) of the deburring knife (11) has an approximately rectangular cross-section, a right-hand and left-hand side edge (39, 40) being directed approximately parallel to one another and forming the approximately rectangular end face (27) of the deburring knife (11).

5. Deburring knife according to claim 3, **characterised in that** the deburring knife (11) is configured in a spectacle shape (double-c-shaped) with arcuate edges (39', 40'), a recess for receiving the deburring knife (11) in the tool holder (26) being configured identically.

6. Deburring knife according to any one of the preceding claims 1 to 5, **characterised in that** a chip face (33) for removing the chips is adjoined by the cutting edge (12), the cutting edge (12) being arranged radially more remote in relation to a centre longitudinal line (38) of the deburring knife (11) than a free edge (36), which is connected to the cutting edge (12) by means of a free face (35).

## Revendications

1. Lame d'ébavurage (11) pour un outil d'ébavurage pour ébavurer les bords de perçages traversants d'une pièce (25), qui s'étend radialement vers l'extérieur et est poussée radialement vers l'extérieur à l'encontre d'une force élastique, étant précisé que la lame d'ébavurage présente au moins une arête de coupe (12) à peu près cunéiforme qui est reliée par une surface de commande (13, 13', 13") à une surface frontale (27), et que l'arête de coupe (12) de la lame d'ébavurage définit en direction de la surface de pièce (18) un angle négatif (23) qui produit sur la lame d'ébavurage (11), lors de l'utilisation, une composante de force de traction qui tire sur ladite lame (11) radialement vers l'extérieur à partir d'un axe de rotation (1) et maintient la lame (12) de manière relativement stable dans une position extérieure stable, dirigée vers l'extérieur, et que la surface de commande (13, 13', 13") définit un angle positif (23) en direction de la surface de pièce (18),
**caractérisée en ce que** l'arête de coupe (12) est conçue comme une droite à inclinaison conique suivant l'angle négatif (23), qui a en supplément une forme concave, convexe ou en S, un angle au centre qui traverse l'arête de coupe (12) définissant un angle négatif (23) par rapport à la surface de pièce (18), et **en ce que** la surface de commande (13, 13', 13") qui fait suite à l'arête de coupe (12) est conçue comme une surface bombée, la surface bombée ayant une forme concave ou arquée.

2. Lame d'ébavurage selon la revendication 1, **caractérisée en ce que** deux arêtes de coupe (12) disposées symétriquement par rapport à un axe médian longitudinal (38) et à l'opposé l'une de l'autre présentent des angles et des formes différents.

3. Lame d'ébavurage selon l'une des revendications 1 ou 2 précédentes, **caractérisée en ce qu'**elle est disposée sur un porte-outil (26) qui est entraîné en rotation dans l'axe de rotation (1).

4. Lame d'ébavurage selon l'une des revendications 1 à 3 précédentes, **caractérisée en ce que** la surface frontale (27) de la lame d'ébavurage (11) présente une section transversale rectangulaire, des arêtes latérales droite et gauche (39, 40) étant à peu près parallèles et formant la surface frontale (27) à peu près rectangulaire de la lame d'ébavurage (11).

5. Lame d'ébavurage selon la revendication 3, **caractérisée en ce que** la lame d'ébavurage (11) a la forme de lunettes (forme en double C) avec des arêtes courbes (39', 40'), un creux identique étant formé dans le porte-outil (26) pour recevoir la lame d'ébavurage (11).

6. Lame d'ébavurage selon l'une des revendications 1 à 5 précédentes, **caractérisée en ce qu'**une face d'évacuation de copeaux (33) fait suite à l'arête de coupe (12) pour évacuer les copeaux, l'arête de coupe (12) étant plus éloignée radialement d'un axe médian longitudinal (38) de la lame d'ébavurage (11) qu'une arête libre (36) qui est reliée par une surface libre (35) à la l'arête de coupe (12).
